(19) Europäisches Patentamt
European Patent Office
Office européen des brevets

(11) Numéro de publication: **0 210 105**
**B1**

(12) **FASCICULE DE BREVET EUROPEEN**

(45) Date de publication du fascicule du brevet: **28.11.90**

(21) Numéro de dépôt: **86401570.6**

(22) Date de dépôt: **15.07.86**

(51) Int. Cl.$^5$: **G 11 B 5/127,** G 11 B 5/17 // G11B5/255

(54) **Tête magnétique longue durée monolithique à solénoide intégré, et procédé pour sa fabrication.**

(30) Priorité: **16.07.85 FR 8510870**

(43) Date de publication de la demande:
**28.01.87 Bulletin 87/05**

(45) Mention de la délivrance du brevet:
**28.11.90 Bulletin 90/48**

(84) Etats contractants désignés:
**AT BE CH DE GB IT LI NL SE**

(56) Documents cités:
**FR-A-1 204 609**
**FR-A-1 446 508**
**US-A-2 674 659**
**US-A-3 731 005**

**PATENTS ABSTRACTS OF JAPAN, vol. 6, no. 112 (P-124)990r, 23 juin 1982; & JP-A-57 40 717 (FUJITSU K.K.) 06-03-1982**

**PATENTS ABSTRACTS OF JAPAN, vol. 6, no. 104 (P-122)982r, 15 juin 1982; & JP-A-57 36 420 (TOKYO DENKI KAGAKU KOGYO K.K.) 27-02-1982**

(73) Titulaire: **EUROFARAD-EFD**
**93 rue Oberkampf**
**F-75540 Paris Cédex11 (FR)**

(72) Inventeur: **Dubuisson, Jacques**
**22, avenue Emile Zola**
**F-75015 Paris (FR)**
Inventeur: **Benain, Ezer**
**4, rue des Archives**
**F-94000 Creteil (FR)**
Inventeur: **Laville, Henri**
**19, rue Jeanne d'Arc**
**F-77400 Lagny S/Marne (FR)**

(74) Mandataire: **Schrimpf, Robert et al**
**Cabinet Regimbeau 26, Avenue Kléber**
**F-75116 Paris (FR)**

(56) Documents cités:
**PATENTS ABSTRACTS OF JAPAN, vol. 6, no. 2, (P-96)880r, 8 janvier 1982; & JP-A-56 127 914 (TOKYO DENKI KAGAKU KOGYO K.K.) 07-10-1981**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 210 105 B1**

Courier Press, Leamington Spa, England.

## Description

La présente invention concerne les têtes magnétiques, simples ou multiples, de lecture ou d'écriture.

La structure générale d'une telle tête comprend une région de matériau magnétique de forme générale annulaire avec entrefer, et au moins un solénoïde entourant cette région annulaire.

Dans la plupart des têtes magnétiques connues, la région de matériau magnétique est soit constituée d'un bloc de ferrite, soit de feuilles métalliques estampées ou gravées, le métal choisi étant un alliage magnétique approprié, tel que l'alliage connu sous le nom "mumétal".

L'organe générateur ou récepteur de champ magnétique est constitué d'un ou plusieurs bobinages de fil réalisé(s) sur une carcasse isolante. Pour permettre la mise en place du ou des bobinage(s), l'anneau en matériau magnétique est généralement réalisé sous forme de deux pièces initialement séparées, qui sont ensuite accolées après mise en place des bobinages.

L'ensemble des différentes pièces constituant la tête magnétique est logé et maintenu dans un boîtier assurant la protection et la fixation au dispositif utilisant la tête.

Ces têtes classiques présentent plusieurs inconvénients:

— leur production nécessite de nombreuses opérations de montage, d'autant plus délicates que les dimensions sont réduites, en particulier dans le cas des têtes multiples;

— l'usure est relativement rapide, car le ferrite utilisé doit être un ferrite doux, qui est de faible dureté; par ailleurs les matériaux magnétiques tels que le mumétal sont des matériaux relativement mous;

— enfin, du point de vue du rendement magnétique, les pertes peuvent être importantes du fait de la géométrie des différentes pièces, dont le choix n'est pas libre en raison des contraintes d'usinage et d'assemblage.

Aussi, dans le but de réaliser une tête magnétique à très longue durée de vie, dont la surface en contact avec la bande magnétique ait une dureté équivalente à celle des céramiques les plus dures, le brevet des Etats-Unis d'Amerique n° 3 731 005 décrit une tête magnétique conforme au préambule dans laquelle la tête magnétique est formée d'un empilement fritté de feuilles de céramique dont certaines au moins portent des motifs magnétiques et éventuellement des motifs conducteurs préétablis, les différents motifs magnétiques étant superposés et étant chacun de forme générale annulaire avec entrefer. La structure feuilletée alternant les couches magnétiques et les couches de céramique procure une dureté équivalente à celle de la céramique, donc très supérieure à ceux des matériaux utilisés jusqu'à présent.

Un but de l'invention est de réaliser, dans un ensemble monolithique, la tête avec sa région magnétique et le solénoïde intégré, de manière à éliminer toute opération de bobinage et d'assemblage d'éléments réalisés séparément.

A cet effet, selon l'invention, les conducteurs du solénoïde sont formés par des vias métallisés formés perpendiculairement à l'empilement de part et d'autre des motifs magnétiques et répartis sur au moins une rangée le long de ceux-ci, les différents vias étant réunis entre eux pour former les spires du solénoïde par des pistes conductrices formées au voisinage de la surface inférieure et de la surface supérieure de l'empilement.

Par ailleurs, le frittage en une même opération de tous les éléments constitutifs (à la fois les éléments magnétiques et les éléments conducteurs constituant le solénoïde) permet d'éviter toute opération ultérieure d'assemblage et permet d'obtenir immédiatement un composant assurant les mêmes fonctions que les têtes de la technique antérieure, avec une possibilité supplémentaire d'en optimiser la géométrie, du fait de l'absence de contraintes d'usinage et d'assemblage.

De préférence, les feuilles portent, autour de chaque trou de via, une collerette conductrice, les différentes collerettes d'un même via étant réunies par la métallisation de la paroi intérieure de celui-ci.

Avantageusement, et notamment lorsqu'il est prévu une pluralité de rangées de vias le long des motifs magnétiques, les pistes conductrices réunissant les différents vias sont réalisées sous forme de conducteurs enterrés répartis sur une pluralité de niveaux d'interconnexion.

En ce qui concerne le choix des matériaux constitutifs:

— la céramique doit présenter de bonnes propriétés mécaniques et une bonne frittabilité (notamment sous atmosphère réductrice), tout en étant compatible avec les autres matériaux utilisés. A cet égard, la céramique est de préférence une céramique du type $Al_2O_3$—$SiO_2$—MgO ou $Al_2O_3$—$SiO_2$—CaO, et de préférence une céramique de type cordiérite à basse température de frittage.

— Matériau magnétique: on le choisit de préférence dans le groupe comprenant le fer, le nickel, le cobalt, ainsi que les alliages magnétiques de fer, de nickel, de cobalt, de maganèse, de molybdène, de cuivre et d'aluminium.

— Matériau conducteur: il est choisi dans le groupe comprenant l'argent, le cuivre, le nickel et leurs alliages, en tenant compte bien entendu de la température maximale de frittage de la céramique choisie; à cet égard, il est souhaitable de prendre une céramique à faible température de frittage (moins de 1000°C), ce qui permet de choisir des métaux tels que le cuivre ou l'argent fusibles à environ 1000°C, en diminuant en outre les risques de diffusion du métal dans la céramique.

L'invention concerne également un procédé de fabrication d'une tête magnétique, comprenant les étapes suivantes:

a) montage, sur un support de travail formant

référence de position, d'au moins une feuille de céramique crue coulée, comportant des perçages de vias à des emplacements préétablis,

b) sérigraphie sur cette feuille de collerettes autour des vias, un moyen d'une première encre de métallisation,

c) éventuellement, répétition des étapes a) et b),

d) sérigraphie sur cette feuille de pistes conductrices de liaison, au moyen de la première encre de métallisation,

e) éventuellement, addition à l'empilement de feuilles supplémentaires portant des motifs conducteurs préétablis, pour la réalisation de niveaux d'interconnexion,

f) sérigraphie supplémentaire, sur la feuille supérieure de l'empilement, du motif magnétique, au moyen d'une seconde encre de métallisation,

g) répétition des étapes a), b) et f) jusqu'à obtention de l'épaisseur désirée,

h) formation d'une couche de surface par répétition des étapes a) et b),

i) éventuellement, addition à l'empilement de feuilles supplémentaires portant des motifs conducteurs préétablis, pour la réalisation de niveaux d'interconnexion,

j) sérigraphie, en surface du bloc, des pistes conductrices de liaison,

k) métallisation de la paroi intérieure des vias, au moyen d'une troisième encre de métallisation, chargée en céramique,

l) compression de l'empilement,

m) élimination des matières organiques résiduelles,

n) frittage de la céramique,

o) réalisation éventuelle de métallisations extérieures.

L'entrefer peut éventuellement être formé par un trait de scie pratiqué sur le bloc fritté, l'intervalle étant rempli par un matériau vitrifiable non ferromagnétique.

Dans une variante de mise en oeuvre, l'étape de sérigraphie du motif magnétique est remplacée par le dépôt d'un motif homologue de céramique crue sur une feuille de matériau magnétique.

D'autres caractéristiques et avantages de l'invention apparaîtront à la lecture de la description détaillée ci-dessous d'exemples de réalisation, faite en référence aux dessins annexés sur lesquels:

— les figures 1 et 2 montrent le dessin des différents motifs conducteurs et magnétiques sérigraphiés sur les feuilles de céramique,

— la figure 3 est un détail agrandi de la région repérée III sur la figure 1,

— la figure 4 est une coupe transversale de l'empilement, au niveau d'un via,

— les figures 5a et 5b illustrent schématiquement la manière dont les vias sont réunis pour former des spires du solénoïde,

— la figure 6 est une vue perspective du composant terminé.

On va décrire deux exemples de réalisation, différant essentiellement par le choix des matériaux, conditionnés principalement par la température de frittage de la céramique, qui est une basse température dans le premier cas, et une haute température dans le second.

De façon générale, on entendra par "haute température" une température maximale de cuisson supérieure à 1300°, généralement de l'ordre de 1350 à 1400°C, et par "basse température" une température maximale de frittage inférieure à 1 000°C, généralement de l'ordre de 950°C.

Exemple I

1°) Préparation d'une poudre céramique frittable à basse température.

On connaît déjà des céramiques à faible température de frittage, telles que les céramiques de type silico-aluminate.

On préfèrera cependant utiliser une céramique de type cordiérite, en raison de ses excellentes propriétés diélectriques et mécaniques.

Pour que la poudre de cordiérite soit frittable à basse température, on la préparera selon le procédé ci-dessous.

Un procédé permettant la préparation d'une telle poudre comprend par exemple les étapes consistant successivement;

à préparer une solution alcoolique mixte d'un sel d'aluminium et de silicium, lesdits sels devant être solubles dans l'alcool ou dans un solvant miscible avec l'alcool,

à préparer une solution d'un sel de magnésium soluble dans l'alcool ou dans un solvant miscible avec l'alcool ou encore dans son acide correspondant,

à préparer une solution en mélangeant les deux solutions précédentes sous agitation vigoureuse pour obtenir une solution homogène,

à ajouter à la solution précédente un agent hydrolysant sous forme de base faible totalement volatile, ce qui conduit à la formation d'un gel,

à traiter thermiquement le gel obtenu à une température au plus égale à 450°C pendant une durée au plus égale à 24h,

à traiter thermiquement la poudre obtenue à une température comprise entre 450°C et 900°C pendant une durée au plus égale à 6h.

De préférence, l'étape de traitement thermique de la poudre est précédée d'une étape de traitement par de l'eau oxygénée à une température comprise entre 60°C et 100°C, puis de filtrage de la suspension obtenue.

L'aluminium est introduit:

— soit sous forme d'un alcoxyde soluble dans l'alcool de formule

$$Al\left[O(CH_2)_n\ CH_3\right]_3$$

dans laquelle n représente un nombre entier compris entre 0 et 4.

On utilise avantageusement le butoxyde d'aluminium de formule

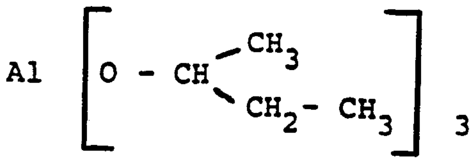

Mais d'autres alcoxydes conduisent également à de bons résultats, tels que l'éthoxyde, le propoxyde et l'isopropoxyde d'aluminium:

— soit sous forme de sels organiques ou complexes organiques, tels que l'acétate d'aluminium, le benzoate d'aluminium, l'acétylacétonate d'aluminium, le stéarate d'aluminium.

D'une façon générale, tous les sels ou complexes organiques solubles dans l'alcool ou solubles dans un solvant miscible avec l'alcool conviennent à la réalisation de l'invention:

— soit encore sous forme de sels minéraux, tels que le nitrate d'aluminium Al $(NO_3)_3$ hydraté ou non en solution alcoolique ou acétique, le chlorure d'aluminium Al $Cl_3$ en solution alcoolique; en portant cette dernière solution à l'ébullition pendant un temps suffisant, on élimine l'acide chlorhydrique et on génère l'alcoxyde d'aluminium correspondant.

D'une façon générale, tous les sels d'aluminium solubles dans l'alcool ou dans un solvant miscible avec l'alcool conviennent à la réalisation de l'invention.

Le silicium est introduit:

— soit sous forme d'un alcoxyde soluble dans l'alcool de formule

$$Si\left[O\ (CH_2)_n\ CH_3\right]_4$$

dans laquelle n représente un nombre entier compris entre 0 et 4.

On utilise avantageusement l'éthoxyde de silicium de formule

$$Si\left[OC_2H_5\right]_4$$

Mais d'autres alcoxydes de silicium conduisent également à de bois résultats, tels que le propoxyde, l'isopropoxyde et le butoxyde de silicium:

— soit sous forme d'esters ou de sels, tels que le tétracétate de silicium $(CH_3—COO)_4$ Si soluble dans l'acide acétique, ou encore un silicate d'ammonium quaternaire.

D'une façon générale, tous les esters ou sels solubles dans l'alcool ou solubles dans un solvant miscible avec l'alcool, ou encore dans leur acide correspondant conviennent à la réalisation de l'invention.

Le magnésium est introduit:

— soit sous forme d'un ester ou d'un sel.

On utilise avantageusement l'acétate de magnésium $Mg(CH_3COO)_2$ hydraté ou non dans de l'acide acétique anhydre.

D'autres esters peuvent être utilisés de la même façon, tels que benzoate, propionate, oléate, stéarate de magnésium.

D'une façon générale, tout ester ou sel de magnésium soluble dans l'alcool ou dans un solvant miscible avec l'alcool, ou encore dans son acide correspondant convient à la réalisation de l'invention:

— soit sous forme de sels minéraux, tels que nitrate ou chlorure de magnésium hydraté ou non en solution alcoolique.

La solution mixte de sels d'aluminium et de silicium est préparée en présence d'un alcool qui peut être par exemple l'isopropanol.

L'hydrolyse qui conduit à la formation du gel s'effectue à une température généralement comprise entre 20°C et 80°C, de préférence entre 20°C et 50°C par une base faible, telle que l'hydrazine hydratée $NH_2—NH_2$, $H_2O$. D'une façon générale, toute base faible ne contenant que des ions volatils, telle que l'ammoniaque dilué, l'hydroxylamine, les sels d'ammonium d'acide faible (carbonate d'ammonium, carbamate d'ammonium) convient à la réalisation de cette phase du procédé.

On utilise cependant de façon préférentielle l'hydrazine hydratée, car celle-ci joue le rôle d'"égalisateur" de cinétique d'hydrolyse. Ce rôle exercé par l'hydrazine hydratée sur les cinétiques d'hydrolyse est d'un intérêt tout particulier lorsque l'on utilise comme produits de départ des alcoxydes d'aluminium et de silicium et l'acétate de magnésium, qui ont des cinétiques d'hydrolyse différentes: l'alcoxyde d'aluminium s'hydrolyse facilement, l'alcoxyde de silicium plus difficilement, l'acétate de magnésium se dissout dans l'eau. L'hydrazine hydratée permet de réaliser une hydrolyse partielle ou totale des alcoxydes accordant ainsi les vitesses de gélification et liant l'ion $Mg^{2+}$ au gel formé.

Il convient, à ce propos, de noter qu'il est souhaitable que la solution soit totalement exempte d'eau, car la moindre trace d'eau provoquerait une hydrolyse incontrôlée de l'alcoxyde le plus fragile, c'est-à-dire de l'alcoxyde d'aluminium. On note toutefois que si l'alcoxyde d'aluminium est remplacé par du nitrate d'aluminium, la présence de petites quantités d'eau n'est pas gênante.

Le traitement thermique auquel est soumis le gel après hydrolyse s'effectue à une température au plus égale à 450°C, généralement comprise entre 200° et 450°C, pendant une durée au plus égale à 24 h, généralement comprise entre 1 et 2 heures, la vitesse de montée en température étant par exemple comprise entre 50°C et 100°C/h. Le but de ce traitement thermique est d'éliminer la plus grande partie des solvants, de l'eau et de l'hydrazine. A l'issue de ce traitement, la poudre obtenue est de couleur légèrement jaunâtre.

. La poudre est éventuellement lavée à l'eau oxygénée de préférence concentrée (20—30%) à une température comprise entre 60°C et 100°C. Ce

traitement à l'eau oxygénée a pour but d'éliminer les derniers radicaux organiques pouvant être liés aux métaux Al, Si ou Mg.

Le traitement à l'eau oxygénée peut être éventuellement remplacé par un barobottage d'air à une température comprise entre 80°C et 100°C.

On notera que cette étape de traitement à l'eau oxygénée peut être supprimée, si l'application à laquelle la poudre est destinée, n'est pas perturbée par la présence de traces de carbone, résultant de la pyrolyse de matières organiques non totalement éliminées par calcination lors du traitement thermique.

La poudre, après lavage à l'eau oxygénée, est soumise à un nouveau traitement thermique qui s'effectue à une température comprise entre 450°C et 900°C, généralement entre 550°C et 700°C pendant une durée au plus égale à 6 h, généralement comprise entre 30 et 120 min., afin d'éliminer l'eau de constitution et d'hydratation.

La poudre obtenue est une poudre relativement grossière qui, après un broyage léger, donne une poudre constituée de grains dont les dimensions sont comprises entre 0,01 μ et 10 μ, et est de couleur blanche.

Les proportions des constituants de départ pourront être légèrement modifiées, sans toutefois sortir du domaine proche de la cordiérite, défini par les proportions suivantes: 60—50% $SiO_2$, 5—20% MgO, 20—40% $Al_2O_3$.

2°) Préparation de la barbotine et mise en forme de la céramique crue.

Une fois obtenue la poudre, on prépare une barbotine en mélangeant environ 1 partie de poudre et 1,5 partie d'un liant organique (parties en poids).

Le liant organique est de composition classique; par exemple:

— alcool polyvinylique (environ 5%),

— plastifiant (environ 15%) tel que polyéthylèneglycol, éthylèneglycol, "cellosolve" (éther monoéthylique de l'éthylèneglycol),

— additifs appropriés: agent mouillant, défloculant, dispersant, antistatique, . . . ,

— solvant par exemple l'eau.

En variante, on peut également utiliser la composition suivante:

— polyvinylbutyral,

— plastifiant tel que dibutylphtalate ou analogue,

— additifs,

— solvant organique tel que trichloréthylène, trichloréthane

— méthyléthylcétone ou alcool éthylique.

On réalise ensuite des feuilles de céramique crue par coulage de cette barbotine, puis séchage des feuilles pour permettre l'évaporation du solvant et découpe aux dimensions voulues.

3°) Réalisation du composant.

Les feuilles ainsi coulées, d'épaisseur 20 à 25 μm, sont indexées par perçage de trous à la périphérie; ces trous serviront de repères pour la superposition précise des différentes feuilles de l'empilement.

On procède ensuite au perçage des vias correspondant aux parties verticales des différentes spires du solénoïde.

On peut ainsi adopter la disposition de la figure 1, où la référence 10 désigne la surface de la feuille de céramique crue, la référence 20 les différents vias et la référence 30 la position du motif magnétique qui sera déposé ultérieurement.

Pour augmenter le nombre de spires du solénoïde, il est possible de prévoir plusieurs rangées de vias de part et d'autre du motif 30; on a ainsi représenté sur les figures deux rangées de vias, disposés en quinconce.

La feuille ainsi préparée est montée sur un cadre métallique qui servira de références de position pour la suite des opérations.

On sérigraphie ensuite autour des vias une collerette 21 (figure 3) au moyen d'une pâte à base de métal conducteur, le pigment métallique étant par exemple un alliage cuivre-nickel à 90%—10%, ou encore un alliage argent-palladium à au moins 80% d'argent.

Les dimensions des collerettes sont par exemple celles indiquées figure 3, c'est-à-dire une collerette d'un diamètre de 500 μm pour un via d'un diamètre de 250 μm, la distance minimale entre collerettes adjacentes étant de 250 μm; en variante, il est possible de réduire ces dimensions de moitié pour augmenter encore la compacité de l'ensemble (notamment si l'on souhaite multiplier le nombre de rangées de vias).

L'encre est ensuite séchée, par exemple par exposition à un rayonnement infrarouge de quelques dizaines de secondes.

On superpose ensuite à cette première feuille une seconde feuille identiquement préparée, pourvue de vias sérigraphiés.

On répète l'opération avec une troisième feuille mais, pour celle-ci, après la première sérigraphie des vias et après séchage, on procède à une seconde sérigraphie du motif magnétique 30, celui-ci ayant la forme représentée figure 2; cette dernière feuille sera donc pourvue à la fois de motifs conducteurs (les vias) et magnétiques (motif 30).

Les épaisseurs respectives des deux types de motifs seront choisies avec des valeurs aussi proches que possible l'une de l'autre.

Pour le pigment métallique de l'encre du motif magnétique, on peut par exemple utiliser un alliage, proche du mumétal, contenant en poids 75% de nickel, 5% de cuivre, 2% de chrome, 4% de molybdène et 14% de fer.

En variante, on peut utiliser également un alliage cuivre-nickel-cobalt à 50%—21%—29%.

De façon générale, le choix du pigment doit être tel que sa température de frittage soit compatible avec celle de la céramique, et tel que ses constituants restent inertes vis-à-vis de celle-ci.

La figure 2 donne un exemple de dimensionnement, non limitatif, du motif 30. En ce qui concerne l'entrefer, il est possible soit de prévoir un

entrefer directement sérigraphié (de l'ordre de 40 µm, valeur correspondante à la finesse maximale qu'il est possible d'obtenir en cru par sérigraphie), soit de ne pas prévoir d'entrefer à ce stade, et de former celui-ci par un trait de scie réalisé sur le bloc terminé.

On répète l'opération précédente de façon à ajouter n couches identiques, chacune pourvue de ces deux motifs sérigraphiés (vias et motif magnétique), jusqu'à obtenir une épaisseur totale de l'ordre de 1 à 5 mm (les valeurs normalisées d'épaisseur de tête magnétique sont en effet de 1 mm, 3 mm et 5 mm).

On termine l'empilement par addition de deux feuilles, identiques aux deux feuilles de départ, comportant uniquement des sérigraphies de vias.

La structure de l'empilement est alors celle illustrée figure 4.

On procède ensuite à la sérigraphie des motifs 40 qui permettront l'interconnexion de via à via: il peut s'agir de pistes sérigraphiées en surface (recto-verso) de l'empilement, lorsqu'un seul niveau d'interconnexion est nécessaire.

Bien entendu, les motifs formés au verso de l'empilement seront réalisés par addition de feuilles supplémentaires portant des motifs appropriés, avant mise en place des premières feuilles portant les motifs magnétiques.

Lorsque les motifs conducteurs 40 risquent de se croiser, en particulier dans le cas où il est prévu une pluralité de rangées de vias le long du motif magnétique, on réalise alors, selon une technique classique, des interconnexions à plusieurs niveaux avec des pistes enterrées.

Les figures 5a et 5b montrent schématiquement une interconnexion à deux niveaux $N_1$, $N_2$ pour interconnecter deux séries de vias, qui formeront les deux séries de spires du solénoïde; les flèches indiquent le sens du courant: dans le cas de la figure 5a, l'interconnexion est une interconnexion non planaire, alors qu'elle peut être planaire pour le schéma de la figure 5b.

Les vias sont ensuite métallisés. Pour cela, on dépose par exemple une faible quantité appropriée d'encre de métallisation, qui coule par gravité dans le trou et se dépose sur la paroi intérieure du via (dépôt référencé 22 sur la figure 4), réunissant ainsi les collerettes de chaque couche et constituant les parties conductrices verticales de chaque boucle du solénoïde.

On peut également effectuer le dépôt de l'encre au moyen d'un goupillon introduit dans le trou.

L'encre utilisé est une encre de même nature que celle ayant servi à la sérigraphie des collerettes 21 et des pistes conductrices 40, avec addition d'une charge de céramique, de préférence du même type de céramique que celle employée pour la préparation des feuilles de diélectrique.

On sépare ensuite la feuille de son cadre métallique, et on la presse dans un ensemble poinçon-matrice de façon à agglomérer l'empilement en un bloc homogène. Si des pistes de liaison doivent être reportées en surface du composant, on procède à ce stade du procédé à leur sérigraphie.

On procède à l'élimination des matières organiques résiduelles, puis au frittage de la céramique (par exemple par une cuisson à 950° pendant 3 heures).

On découpe ensuite les composants individuels de la feuille de céramique frittée (cette découpe peut également se faire avant le frittage de la céramique).

Dans le cas où l'entrefer n'est pas sérigraphié, on pratique un trait de scie pour le constituer, et l'intervalle est rempli par un matériau vitrifiable non ferromagnétique, selon la technique enseignée en particulier par le FR—A—2 474 219, intitulé "tête magnétique en ferrite avec enduit protecteur", au nom de EUROFARAD-EFD.

La figure 6 montre, en vue perspective, une tête magnétique réalisée selon les enseignements de l'invention.

On notera que la région de contact avec la bande magnétique à lire ou à écrire est constituée d'une structure feuilletée alternant matériau magnétique et matériau céramique de grande dureté, d'où la longévité importante de ces têtes.

Il est possible de réaliser aussi bien des têtes de lecture simple que multiple; on a par exemple représenté sur la figure 6 une tête double, comportant donc deux entrefers et deux ensembles de solénoïdes.

4°) Performance

Une tête réalisée selon les enseignements de l'invention présente les caractéristiques suivantes:

— densité d'information 600 bits/mm,

— courant de saturation de l'ordre de l'ampère,

— durée de vie supérieure à $2.10^6$ passages (dans le cas d'une tête destinée à lire des supports discontinus, tels que des tickets où des coupons magnétiques),

— précision d'azimutage inférieure à 5 mn d'angle (pour les têtes multiples),

— vitesse de défilement supérieure à 1 m/seconde.

Exemple II

1°) Préparation d'une poudre céramique frittable à haute température.

On mélange de l'alumine $Al_2O_3$ avec 2 à 4% en poids, de préférence environ 2,5%, de silicate de calcium (51,8% $SiO_2$ et 48,2% CaO).

La poudre obtenue aura une densité d'environ 90 à 95% après frittage à 1400°C.

2°) Réalisation du composant

Les différentes étapes du procédé sont les mêmes que précédemment, à la différence:

— du choix de l'encre des motifs conducteurs, qui sera une encre à base de molybdène ou de tungstène, ou d'alliages de ces métaux, ou de tout autre metal ou alliage réfractaire, c'st-à-dire non fusible à haute température.

— des conditions de frittage:

Dans la mesure où les métaux choisis (molybdène, tungstène) sont des métaux oxydables, le

frittage doit être réalisé en atmosphère contrôlée, réductrice.

La température maximale de frittage sera de l'ordre de 1400°C.

**Revendications**

1. Une tête magnétique, comprenant une région de matériau magnétique de forme générale annulaire avec entrefer, et au moins un solénoïde entourant cette région annulaire, et formée d'un empilement fritté de feuilles de céramique (10) dont certaines au moins portent des motifs magnétiques (30) et des motifs conducteurs préétablis, les différents motifs magnétiques étant superposés et étant chacun de forme générale annulaire avec entrefer (31), caractérisée en ce que les conducteurs du solénoïde sont formés par des vias (20) métallisés formés perpendiculairement à l'empilement, de part et d'autre des motifs magnétiques et répartis sur au moins une rangée le long de ceux-ci, les différents vias étant réunis entre eux pour former les spires du solénoïde par des pistes conductrices (40) formées au voisinage de la surface inférieure et de la surface supérieure de l'empilement.

2. Une tête magnétique selon la revendication 1, caractérisée en ce que les feuilles portent, autour de chaque trou de via, une collerette (21) conductrice, les différentes collerettes d'un même via étant réunies par la métallisation (22) de la paroi intérieure de celui-ci.

3. Une téte magnétique selon la revendication 1, caractérisée en ce que les pistes conductrices réunissant les différents vias sont réalisées sous forme de conducteurs enterrés répartis sur une pluralité de niveaux d'interconnexion (N1, N2).

4. Une tête magnétique selon la revendication 1, caractérisée en ce que la céramique est du type $Al_2O_3$—$SiO_2$—MgO ou $Al_2O_3$—$SiO_2$—CaO.

5. Une tête magnétique selon la revendication 4, caractérisée en ce que la céramique est une céramique de type cordiérite à basse température de frittage.

6. Une tête magnétique selon la revendication 1, caractérisée par le fait que le matériau des motifs magnétiques est choisi dans le groupe comprenant le fer, le nickel, le cobalt, ainsi que les alliages magnétiques de fer, de nickel, de cobalt, de manganèse, de molybdène, de cuivre et d'aluminium.

7. Une tête magnétique selon la revendication 1, caractérisée par le fait que le matériau des motifs conducteurs est choisi dans le groupe comprenant l'argent, le cuivre, le nickel et leurs alliages.

8. Procédé de fabrication d'une tête magnétique selon l'une des revendications 1 à 7, caractérisé par les étapes suivantes:

a) montage, sur un support de travail formant référence de position, d'au moins une feuille de céramique crue (10), coulée, comportant des perçages de vias (20) à des emplacements préétablis,

b) sérigraphie sur cette feuille de collerettes (21) autour des vias, au moyen d'une première encre de métallisation,

c) éventuellement, répétition des étapes a) et b),

d) sérigraphie sur cette feuille de pistes conductrices de liaison, au moyen de la première encre de métallisation,

e) éventuellement, addition à l'empilement de feuilles supplémentaires portant des motifs conducteurs préétablis, pour la réalisation de niveaux d'interconnexion,

f) sérigraphie supplémentaire, sur le feuille supérieure de l'empilement, du motif magnétique, au moyen d'une seconde encre de métallisation,

g) répétition des étapes a), b) et f) jusqu'à obtention de l'epaisseur désirée,

h) formation d'une couche de surrace par répétition des étapes a) et b),

i) éventuellement, addition à l'empilement de feuilles supplémentaires portant des motifs conducteurs préétablis, pour la réalisation de niveaux d'interconnexion.

j) sérigraphie, en surface du bloc, des pistes conductrices de liaison,

k) métallisation de la paroi intérieure des vias, au moyen d'une troisième encre de métallisation, chargée en céramique,

l) compression de l'empilement,

m) élimination des matières organiques résiduelles,

n) frittage de la céramique,

o) réalisation éventuelle de métallisations extérieures.

9. Procédé de fabrication d'une tête magnétique selon la revendication 8, caractérisé en ce que l'entrefer (31) est formé par un trait de scie pratiqué sur le bloc fritté, l'intervalle étant rempli par un matériau vitrifiable non-ferromagnétique.

10. Procédé de fabrication d'une tête magnétique selon la revendication 8, caractérisé en ce que l'étape de sérigraphie du motif magnétique est remplacée par le dépôt d'un motif homologue de céramique crue sur une feuille de matériau magnétique.

**Patentansprüche**

1. Magnetkopf mit einem Bereich aus magnetischem Material in allgemein ringförmiger Form mit einem Luftspalt und mit wenigstens einer Spule, die diesen ringförmigen Bereich umgibt, und die aus einer gesinterten Anordnung keramischer Blätter (10) gebildet ist, von denen wenigstens bestimmte magnetische Muster (30) und vorgefertigte, leitfähige Muster bestizen, wobei die verschiedenen magnetischen Muster übereinander angeordnet sind und jeweils von allgemeiner ringförmiger Form mit Luftspalt (31) sind, dadurch gekennzeichnet, daß die Leiter der Spule durch metallsierte Vias (20) gebildet werden, die senkrecht zur Anordnung auf der einen und anderen Seite der magnetischen Muster gebildet und wenigstens entlang einer Reihe entiang dieser verteilt sind, wobei die verschiedenen Vias untereinander verbunden sind, um die Windungen der Spule durch in der Nähe der unteren und der

oberen Oberfläche der Anordnung gebildete Leiterbahnen (40) zu bilden.

2. Magnetkopf nach Anspruch 1, dadurch gekennzeichnet, daß die Blätter um jedes Vialoch einen leitfähigen Kragen (21) aufweisen, wobei die verschiedenen Kragen eines selben Vias durch die Metallisierung (22) der internen Wand desselben miteinander verbunden sind.

3. Magnetkopf nach Anspruch 1, dadurch gekennzeichnet, daß die Leitbahnen, die die verschiedenen Vias miteinander verbinden, in der Form von vergrabenen Leitern ausgeführt sind, die auf einer Mehrzahl von Verbindungsbenen ($N_1$, $N_2$) verteilt sind.

4. Magnetkopf nach Anspruch 1, dadurch gekennzeichnet, daß die Keramik vom Typ $Al_2O_3$—$SiO_2$—$MgO_2$ oder $Al_2O_3$—$SiO_2$—CaO ist.

5. Magnetkopf nach Anspruch 4, dadurch gekennzeichnet, daß die Keramik eine Keramik vom Cordierttyp mit niedriger Sintertemperatur ist.

6. Magnetkopf nach Anspruch 1, gekennzeichnet durch die Tatsache daß das Material der magnetischen Muster aus der Gruppe, die Eisen, Nickel, Kobalt ebenso wie die magnetischen Legierungen des Eisens, Nickels, Kobalts, Mangans, Molybdäns, Kupfers und Aluminiums umfaßt, ausgewählt wird.

7. Magnetkopf nach Anspruch 1, gekennzeichnet durch die Tatsache, daß das Material der Leitermuster aus der Gruppe, die Silber, Kupfer, Nickel und ihre Legierungen umfaßt, ausgewählt wird.

8. Verfahren zur Herstellung eines Magnetkopfes nach einem der Ansprüche 1 bis 7, gekennzeichnet durch die folgenden Verfahrensschritte:
a) Montage wenigstens eines ungesinterten, gegossenen Keramikblattes (10) mit Viabohrungen (20) an vorgegebenen Stellen auf einen Arbeitsträger, der eine Positionsreferenz bildet,
b) Siebdruck von Kragen (21) um die Vias auf dieses Blatt mittels einer ersten Metalliserungstinte,
c) eventuell Wiederholung der Schritte a) und b),
d) Siebdruck von Verbindungsleiterbahnen auf dieses Blatt mittels der ersten Metalliserungstinte,
e) eventuell Hinzufügen von zusätzlichen Blättern mit vorgegebenen Leitermustern zur Anordnung zur Herstellung von Verbindungsebenen,
f) zusätzlicher Siebdruck des magnetischen Musters auf der oberste Blatt der Anordnung mittels einer zweiten Metallisierungstinte,
g) Wiederholung der Schritte a), b) und f) bis zum Erhalt der gewünschten Dicke,
h) Bilden einer Oberflächenschicht durch Wiederholen der Schritte a) und b),
i) eventuell Hinzufügen von zusätzlichen Blättern mit vorgegebenen Leitermustern zu der Anordnung zur Herstellung von Verbindungsebenen,
j) Siebdruck auf die Blockoberfläche von Verbindungsleiterbahnen,
k) Metallisierung der inneren Wand der Vias mit einer dritten Metallisierungstinte, die keramikhaltig ist,
l) Zusammenpressen der Anordnung,
m) Entfernen rückständiger organischer Materialien,
n) Sintern der Keramik,
o) eventuelles Ausführen äußeren Metallisierungen.

9. Herstellungsverfahren für einen Magnetkopf nach Anspruch 8, dadurch gekennzeichnet, daß der Luftspalt (31) durch einen Sägeschnitt in den gesinterten Block ausgeführt wird, wobei der Zwischenraum durch ein glasbildendes, nicht ferromagnetisches Material ausgefüllt wird.

10. Herstellungsverfahren für einen Magnetkopf nach Anspruch 8, dadurch gekennzeichnet, daß der Siebdruckschritt für das magnetische Grundmuster durch das Abscheiden eines homologen Musters nicht gesinterter Keramik auf ein Blatt aus magnetischem Material ersetzt wird.

**Claims**

1. Magnetic head, comprising a region of magnetic material of general annular shape with an air gap and at least one solenoid surrounding this annular region and formed by a fritted stack of ceramic plates (10), at least certain of which carry magnetic patterns (30) and pre-established conducting patterns, the various magnetic patterns being superimposed and each being of general annular shape with an air gap (31), characterised in that the conductors of the solenoid are formed by metallised passages (20) formed perpendicularly to the stack, on either side of the magnetic patterns and distributed over at least one row along the latter, the various passages being connected to each other in order to form the turns of the solenoid by conducting paths (40) formed in the vicinity of the lower surface and of the upper surface of the stack.

2. Magnetic head according to Claim 1, characterised in that around each passage aperture, the sheets support a conducting rim (21), the various rims of the same passage being connected by metallisation (22) of the inner wall of the latter.

3. Magnetic head according to Claim 1, characterised in that the conducting paths connecting the various passages are produced in the form of sunken conductors distributed over a plurality of interconnection levels (N1, N2).

4. Magnetic head according to Claim 1, characterised in that the ceramic is of the $A_2O_3$—$SiO_2$—MgO type or $Al_2O_3$—$SiO_2$—CaO type.

5. Magnetic head according to Claim 4, characterised in that the ceramic is a ceramic of the cordierite type having a low fritting temperature.

6. Magnetic head according to Claim 1, characterised by the fact that the material of the magnetic patterns is chosen from the group comprising iron, nickel, cobalt, as well as magnetic alloys of iron, nickel, cobalt, manganese, molybdenum, copper and aluminium.

7. Magnetic head according to Claim 1, characterised by the fact that the material of the conducting patterns is chosen from the group comprising silver, copper, nickel and their alloys.

8. Method for the manufacture of a magnetic head according to one of Claims 1 to 7, characterised by the following stages:
a) mounting, on a working support forming a position reference, of at least one plate of raw ceramic (10), which is cast, comprising passage openings (20) at pre-established locations,
b) serigraphy on this plate of rims (21) around passages, by means of a first metallisation ink,
c) possibly, repetition of stages a) and b),
d) serigraphy on this plate of connecting conducting paths, by means of the first metallisation ink,
e) possibly, addition to the stack of supplementary plates carrying pre-established conducting patterns, for producing interconnection levels,
f) supplementary serigraphy, on the upper plate of the stack, of the magnetic pattern, by means of a second metallisation ink,
g) repetition of the stages a), b) and f) until the desired thickness is obtained,
h) formation of a surface layer by repetition of stages a) and b),
i) possibly, addition to the stack of supplementary plates carrying pre-established conducting patterns, for producing interconnection levels,
j) serigraphy, on the surface of the block, of connecting conducting paths,
k) metallisation of the internal wall of the passages, by means of a third metallisation ink, charged with ceramic material,
l) compression of the stack,
m) elimination of residual organic materials,
n) fritting of the ceramic material,
o) possible carrying out of external metallisations.

9. Method for the manufacture of a magnetic head according to Claim 8, characterised in that the air gap (31) is formed by a saw cut made on the fritted block, the gap being filled by a non-ferromagnetic vitrifiable material.

10. Method for the manufacture of a magnetic head according to Claim 8, characterised in that the stage of serigraphy of the magnetic pattern is replaced by the deposition of a homologous pattern of raw ceramic on a plate of magnetic material.

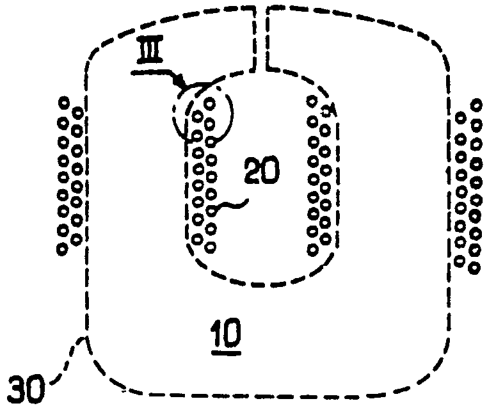


FIG_1

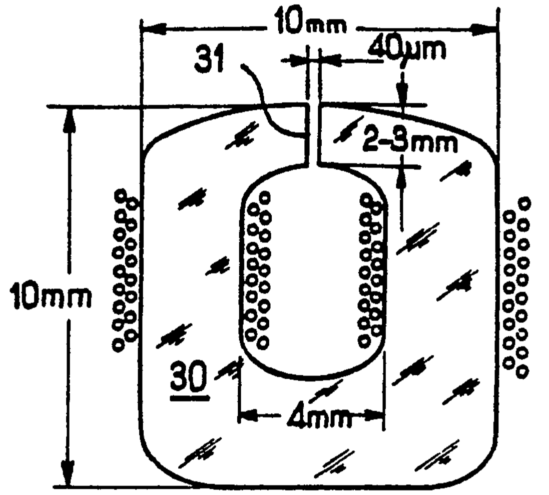


FIG_2

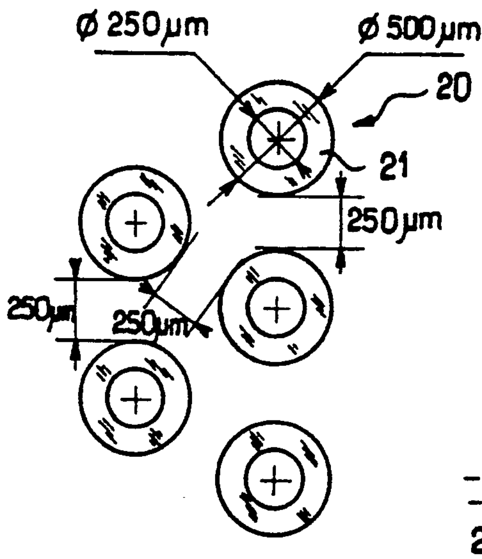


FIG_3

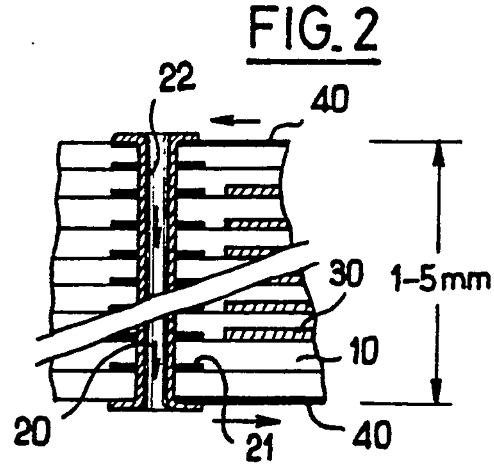


FIG_4

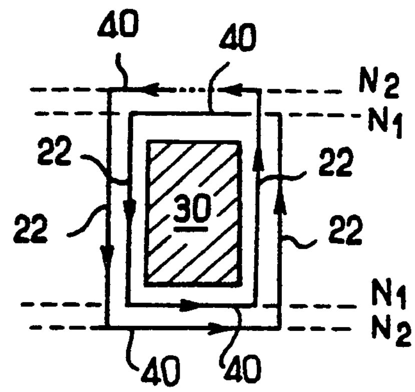


FIG.5a

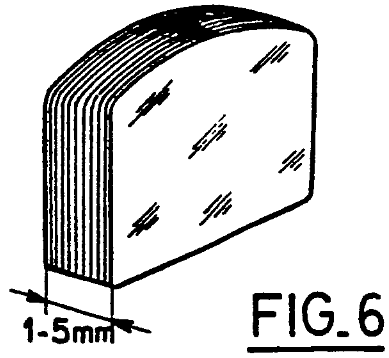


FIG_6

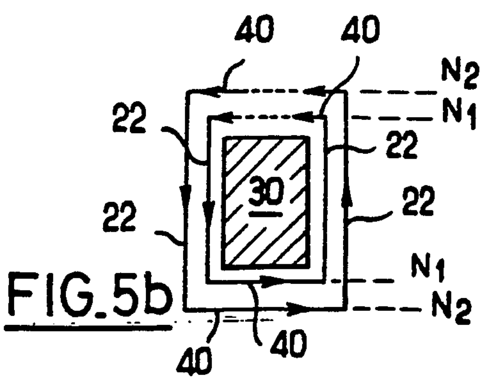


FIG.5b